# EUROPEAN PATENT APPLICATION

(11) **EP 4 481 329 A1**
(43) Date of publication of application: **25.12.2024**
(21) Application number: 24177261.5
(22) Date of filing: 22.05.2024
(51) Int. Cl.: G01C 23/00, G08G 5/00, G01C 5/00

(54) **GENERATING TIME AND ALTITUDE BASED FIXES FOR A FLIGHT MANAGEMENT SYSTEM**

(30) Priority: 20.06.2023 US 202318338298
(71) Applicant: The Boeing Company, Arlington, VA 22202 (US)
(72) Inventor: VOS, Maxim Constantijn, Arlington, 22202 (US); REBOLLO, Daniel Ramiro, Arlington, 22202 (US); MOTA, David Rubio, Arlington, 22202 (US)
(74) Representative: Carrie, Rosemary Louise Hunter

(57) **Abstract**

Techniques for aircraft flight management are disclosed. These techniques include receiving, at a flight management system (FMS) of an aircraft, a target value, the target value including at least one of: (i) an altitude target value or (ii) a time target value. The techniques further include determining a target aircraft position relating to the target value, based on a trajectory for the aircraft. The techniques further include calculating a distance for the aircraft to travel from a current aircraft position to the target aircraft position and displaying the calculated distance in a user interface of the aircraft. The techniques further include providing coordinates for the target aircraft position to the FMS for use in flight management of the aircraft.

## Description

### FIELD

Aspects of the present disclosure relate to aircraft flight management.

### BACKGROUND

The fix info function of an aircraft Flight Management System (FMS) enables the crew to determine the location of points with particular features relative to a custom fix (e.g., a navigation waypoint). For example, a fix info function can be used in a command display unit (CDU) to create various intercept points associated with a waypoint. This can include radial, distance, radial distance, and ABEAM intercept points. Fix info functions on existing FMS, however, are lacking in a variety of features and could be significantly improved.

### SUMMARY

Embodiments include a method. The method includes receiving, at a flight management system (FMS) of an aircraft, a target value, the target value including at least one of: (i) an altitude target value or (ii) a time target value. The method further includes determining a target aircraft position relating to the target value, based on a trajectory for the aircraft. The method further includes calculating a distance for the aircraft to travel from a current aircraft position to the target aircraft position. The method further includes displaying the calculated distance in a user interface of the aircraft. The method further includes providing coordinates for the target aircraft position to the FMS for use in flight management of the aircraft.

Embodiments further include an (optionally, non-transitory) computer-readable medium containing computer program code that, when executed by operation of one or more computer processors, performs operations. The operations include receiving, at an FMS of an aircraft, a target value, the target value including at least one of: (i) an altitude target value or (ii) a time target value. The operations further include determining a target aircraft position relating to the target value, based on a trajectory for the aircraft. The operations further include calculating a distance for the aircraft to travel from a current aircraft position to the target aircraft position. The operations further include displaying the calculated distance in a user interface of the aircraft. The operations further include providing coordinates for the target aircraft position to the FMS for use in flight management of the aircraft.

Embodiments further include a system, including a computer processor; and a memory having instructions stored thereon which, when executed on the computer processor, performs operations. The operations include receiving, at an FMS of an aircraft, a target value, the target value including at least one of: (i) an altitude target value or (ii) a time target value. The operations further include determining a target aircraft position relating to the target value, based on a trajectory for the aircraft. The operations further include calculating a distance for the aircraft to travel from a current aircraft position to the target aircraft position. The operations further include displaying the calculated distance in a user interface of the aircraft. The operations further include providing coordinates for the target aircraft position to the FMS for use in flight management of the aircraft.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
FIG. 1A depicts an example fix info function in a CDU for a FMS, according to one aspect.
FIG. 1B depicts an example radial fix intercept for a FMS, according to one aspect.
FIG. 2 illustrates a controller for altitude and time fixes for a FMS, according to one aspect.
FIG. 3 is a flowchart illustrating updating a flight plan with altitude and time fixes for a FMS, according to one aspect.
FIG. 4 is a flowchart illustrating determining an intersection point for an altitude fix, according to one aspect.
FIG. 5 is a flowchart illustrating determining an intersection point for a time fix, according to one aspect.
FIG. 6A illustrates an example altitude fix for a FMS, according to one aspect.
FIG. 6B illustrates latitude and longitude for an altitude fix for a FMS, according to one aspect.

### DETAILED DESCRIPTION

As discussed above, the fix info function on an FMS enables the crew to determine the location of points with particular features (radial, distance, radial-distance, or abeam) relative to a custom fix. However, existing fix info functions do not allow crewmembers (or FMS) to determine the coordinates of altitude or time targets, relative to the trajectory. One or more techniques disclosed herein provide additional fix info features that allow a user (e.g., a crewmember) to enter altitude and time (e.g., estimated time of arrival (ETA)) as inputs. The FMS determines a distance to go from the current aircraft position to the input field (e.g., along a trajectory).

Further, in an aspect, the fix info function allows the user (e.g., the crewmember) to obtain the coordinates (e.g., latitude and longitude) of the interpolated position that satisfies the desired altitude or time feature. These coordinates can be used by a crewmember to modify a flight plan and improve navigation and control of the aircraft. For example, the interpolated target coordinates can be stored in an electronic repository (e.g., a CDU scratchpad) and provided to an FMS to modify a flight plan. A crewmember can use the coordinates to add an altitude or speed constraint, add a hold pattern, add a planned step, or make any other suitable modifications.

In an aspect, providing altitude and time fix info features provides significant improvements to aircraft FMS. For example, these features allow direct access to the calculated fix coordinates (e.g., latitude and longitude) by the FMS. This allows accurate and seamless use of the coordinates by the FMS to modify a flight plan and improve aircraft control and navigation. For example, fix coordinates can be directly added to a flight plan to enter a restriction, a hold, a required time of arrival operation, a planned step, or for any other suitable flight plan usage. Further, direct use of the fix coordinates significantly reduces errors compared to prior solutions (e.g., manual computation or indirect computation outside the fix info function). This provides for more accurate, efficient, and safer travel for the aircraft.

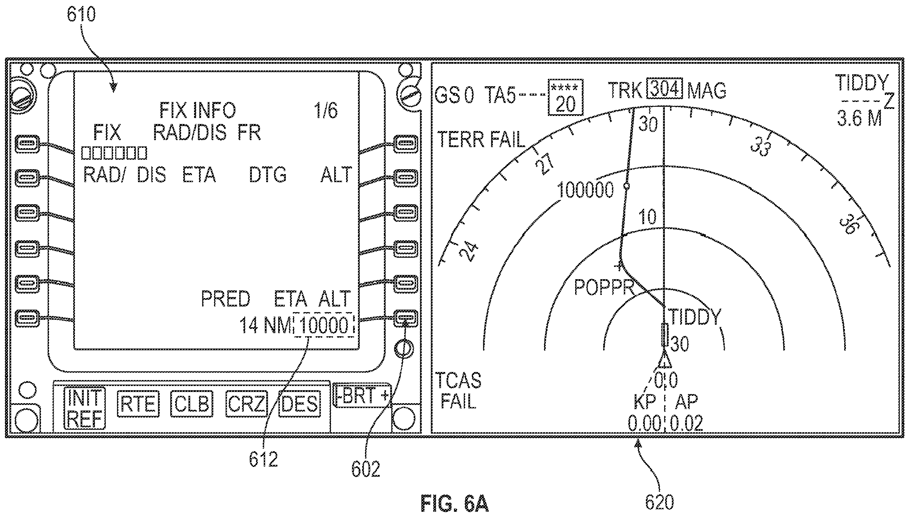

Further, one or more features described herein provide a significantly improved user interface for a FMS. For example, as described below in relation to FIGS. 6A-B, altitude and time fix info features can be seamlessly integrated into a CDU user interface. Further, fix coordinates can be retrieved, and viewed, as part of the CDU user interface without requiring burdensome additional steps or distracting a crewmember from flight navigation, and without requiring significant additional training or guidance to crewmembers.

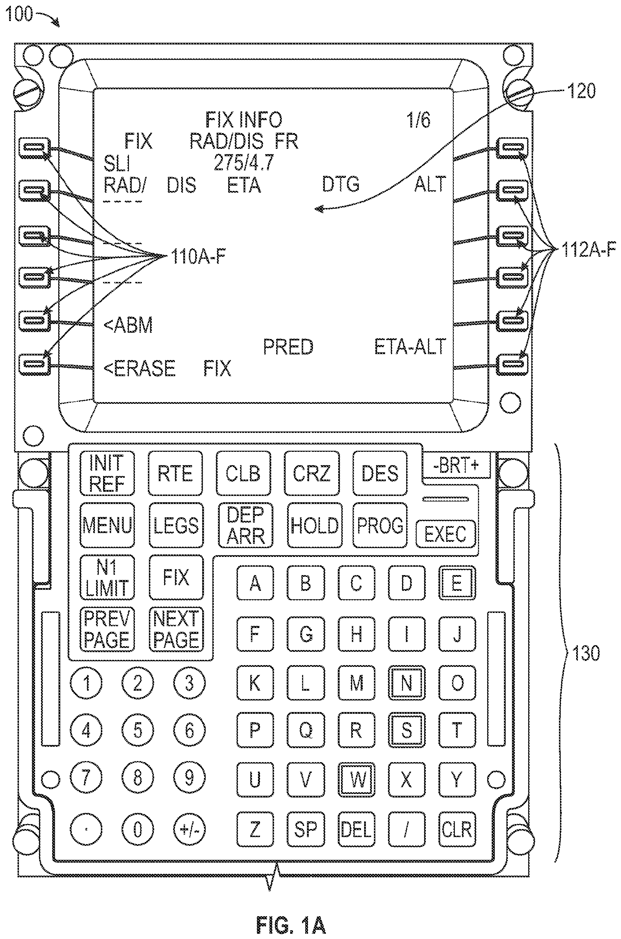

FIG. 1A depicts an example fix info function in a CDU for a FMS, according to one aspect. As discussed above, the Fix Info function of an FMS enables the crew to determine the location of points with particular features relative to a custom fix. In an aspect, the fix info function is included as part of a CDU 100. This is merely an example.

The CDU 100 includes a display 120. In an aspect, the display 120 provides a user interface to allow the crew to use a variety of functions, including a fix info function. The CDU 100 further includes numerous UI inputs. For example, the CDU 100 includes six buttons 110A-F on the left side and six buttons 112A-F on the right side. These buttons can be used to control the various functions of the CDU, including the fix info function. The CDU further includes numerous additional inputs, for example numerous buttons 130. The buttons 110A-F, 112A-F, and 130 are merely examples. The CDU 100 can include any suitable user interface, including touch sensitive inputs (e.g., a touchscreen), voice activated inputs, and any number or type of buttons.

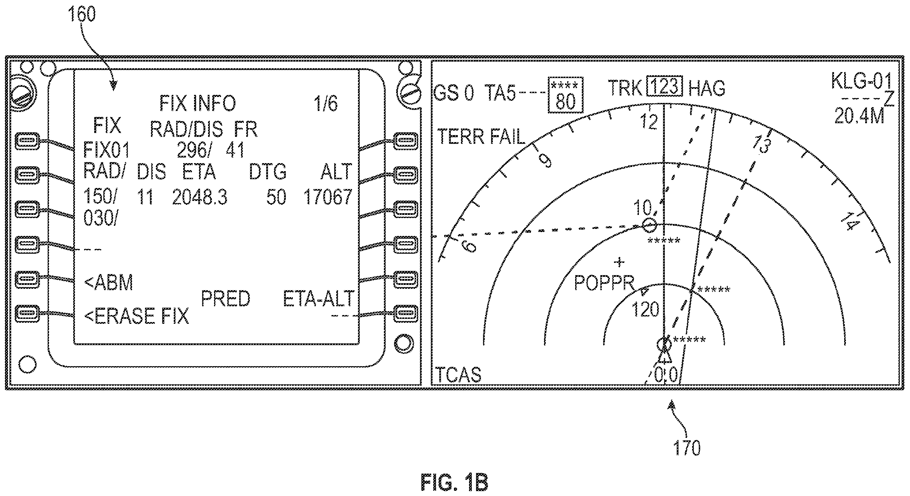

FIG. 1B depicts an example radial fix intercept for a FMS, according to one aspect. In an aspect, a fix info function for a CDU can be used to determine numerous values. For example, a radial entry for the fix info function can be used to determine an intersection (e.g., the first intersection) between a custom fix and the active flight plan, in the direction of a supplied radial (e.g., a supplied radial line). A CDU can display data points for the radial entry, while a navigation display depicts the intersection graphically (e.g., along with other suitable information). For example, the CDU can display ETA, distance to go, or predicted altitude. These are merely example, and the CDU can display any suitable data points.

In an aspect, FIG 1B depicts this radial entry example. A CDU display 160 (e.g., the display 120 illustrated in FIG. 1A) displays numerical data points for the radial intersection. A navigation display 170 displays the intersection visually. Together, an aircraft crew can use this information to determine the location of the intersection and control the aircraft. In an embodiment, the navigation display 170 can display an active or pending trajectory, fixes, airports, terrain, weather, or any other suitable. For example, as illustrated the navigation display 170 shows a map with a current aircraft heading pointing vertically up (e.g., from the triangle at the bottom). The display shows headings (e.g., the outer circle with numbers from 00 to 36, or 0 degrees to 360 degrees). The display also shows circles: equal distance from the aircraft position. In an embodiment, the map can be zoomed in or out and pilots can jump through the fixes of the trajectory to make those the center point instead of the aircraft position (e.g., to see what is coming up later). In the top right the navigation display 170 shows the first upcoming fix or waypoint with the ETA and distance to go.

A radial entry is merely one example of a feature available for a fix info function. In an aspect, a fix info function can also determine distance entry from a custom fix. For example, the fix info function can determine the first intersection between the custom fix and the active flight plan at the supplied distance (e.g., a circle reflecting the supplied distance). A fix info function can further determine a radial distance entry from a custom fix. For example, the fix info function can calculate the distance to travel from the current aircraft position to a position defined by the entered radial and distance from the custom fix. A fix info function can also determine an ABEAM entry from a custom fix. For example, the fix info function can determine the first intersection between the active flight plan and a perpendicular line from the custom fix.

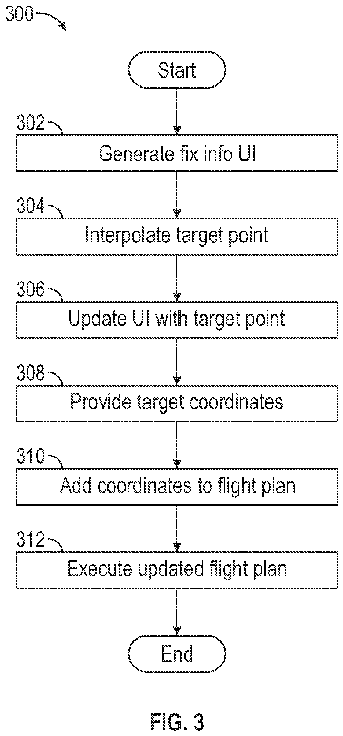

In addition to these features, a fix info function can be improved by adding additional features. In an aspect, a fix info function further includes an altitude entry feature. For example, the fix info function can calculate a distance to travel from the current aircraft position to the first location where the predicted vertical trajectory is estimated to next reach the supplied altitude. Further, a fix info function can include an ETA entry feature. For example, the fix info function can calculate the distance traveled from the aircraft position to the position where the predicted trajectory is estimated to be at the supplied ETA. These altitude and ETA fix info features are discussed further, below, with regard to FIGS. 3-5.

Further, in an aspect, the fix info function can provide a latitude and longitude for the calculated intersection point (e.g., for the altitude or ETA entry feature). The aircraft crew can use this latitude and longitude in a flight plan to improve aircraft navigation. For example, the latitude and longitude can be used for a required time of arrival operation, to add a hold pattern, to specify a planned step on a particular fix, or for any other suitable use.

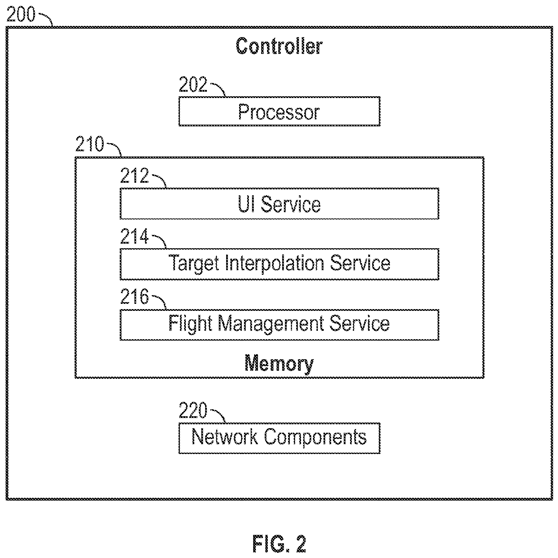

FIG. 2 illustrates a controller 200 for altitude and time fixes for a FMS, according to one aspect. In an aspect, the controller 200 is used with an FMS and a CDU 100, illustrated in FIG. 1A. The controller 200 includes a processor 202, a memory 210, and network components 220. The memory 210 may take the form of any computer-readable medium. For example, the memory 210 may take the form of any non-transitory computer-readable medium. The processor 202 generally retrieves and executes programming instructions stored in the memory 210. The processor 202 is representative of a single central processing unit (CPU), multiple CPUs, a single CPU having multiple processing cores, graphics processing units (GPUs) having multiple execution paths, and the like.

The network components 220 include the components necessary for the controller 200 to interface with a suitable communication network. For example, the network components 220 can include wired, WiFi, or cellular network interface components and associated software to interface with a communication network maintained with an aircraft, or including devices external to the aircraft. Although the memory 210 is shown as a single entity, the memory 210 may include one or more memory devices having blocks of memory associated with physical addresses, such as random access memory (RAM), read only memory (ROM), flash memory, or other types of volatile and/or non-volatile memory.

The memory 210 generally includes program code for performing various functions related to use of the controller 200. The program code is generally described as various functional "applications" or "modules" within the memory 210, although alternate implementations may have different functions and/or combinations of functions.

A UI service 212 facilitates generating a user interface (Ul) for a FMS. For example, the UI service can generate the UI for the CDU display 160 and the navigation display 170 illustrated in FIG. 1A. A target interpolation service 214 facilitates interpolating target intercept points for a fix info function (e.g., altitude and time features of a fix info function). This is discussed further, below, with regard to FIGS. 3-5. A flight management service 216 facilitates managing an aircraft flight (e.g., based on input stemming from the fix info function).

FIG. 3 is a flowchart 300 illustrating updating a flight plan with altitude and time fixes for a FMS, according to one aspect. At block 302 a UI service (e.g., the UI service 212 illustrated in FIG. 2) generates a fix info Ul. For example, the UI service can generate a fix info UI for a CDU display (e.g., the CDU display 160 illustrated in FIG. 1B).

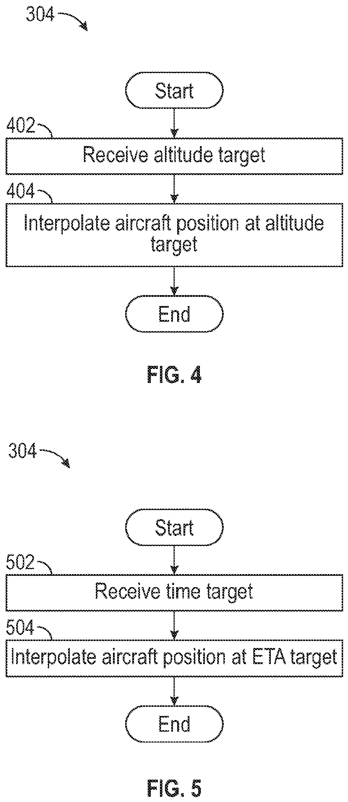

At block 304, a target interpolation service (e.g., the target interpolation service 214 illustrated in FIG. 2) interpolates a target point. For example, a user (e.g., an aircraft crew member) can enter a target altitude value into a CDU. This is discussed further, below, with regard to FIG. 6A. The target interpolation service can calculate the aircraft position at the point at which the aircraft is expected to reach the target altitude. As another example, the user can enter a target time value (e.g., an ETA) into a CDU. The target interpolation service can calculate the target point where the aircraft is estimated to be positioned at the target ETA (e.g., the aircraft's position at the target ETA). These are discussed further, below, with regard to FIGS. 4 and 5.

At block 306, the target interpolation service and UI service update the UI with the target point. For example, the UI service can receive the interpolated target point (e.g., from the target interpolation service) and can update a navigation display UI (e.g., the navigation display 170 illustrated in FIG. 1B) to reflect the target point. This is merely an example, and any suitable service can be used and the target point can be reflected using any suitable technique (e.g., updating any suitable Ul, providing an audio or tactile alert, or any other suitable technique).

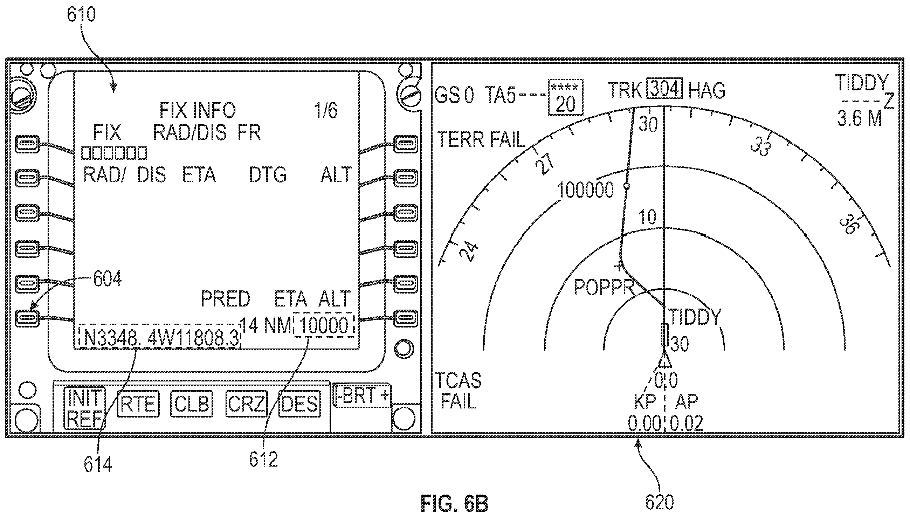

At block 308, the UI service provides target coordinates. As discussed above in relation to block 304, the target interpolation service calculates the target point at which the aircraft will reach the desired altitude or ETA. In an aspect, the UI service can provide coordinates for this position (e.g., latitude and longitude) to a user. For example, a user can request the coordinates using a CDU (e.g., by pressing one of the buttons 110A-F, 112A-F, or 130 in the CDU 100 illustrated in FIG. 1). The UI service can receive the coordinates for the target point and provide those coordinates to a user. This is discussed further, below, with regard to FIG. 6B.

This is merely an example, and the target coordinates can be provided using any suitable technique. For example, the UI service can automatically provide the target coordinates (e.g., without a user request), or can use any other suitable technique. Further, the target interpolation service can record the target coordinates in a suitable storage repository (e.g., a scratchpad memory for the CDU). A crewmember, or an FMS, can then use the recorded coordinates for the flight plan for the aircraft, as discussed further below with regard to block 310.

At block 310, a flight management service (e.g., the flight management service 216 illustrated in FIG. 2) adds the coordinates to a flight plan. For example, at block 308 the target interpolation service can record the coordinates in a CDU scratchpad, or another suitable storage repository. In an aspect, the flight management service can add the coordinates (e.g., the latitude and longitude) and execute a desired route to the coordinates. Alternatively, or in addition, a crewmember can add the coordinates to a flight plan. For example, the crewmember can past the coordinate values from the CDU scratchpad into the flight plan.

At block 312, the flight management service executes an updated flight plan. For example, a crewmember can enter a restriction using the target coordinates, start a required time of arrival operation using the coordinates, enter a hold using the coordinates, enter a planned step using the coordinates, or take any other suitable action. The flight management service updates the flight plan with the change, and executes the updated flight plan. For example, a crewmember can use the updated flight plan to control the aircraft along the desired route.

FIG. 4 is a flowchart illustrating determining an intersection point for an altitude fix, according to one aspect. In an aspect, FIG. 4 corresponds with one example for block 304 illustrated at FIG. 3. At block 402, a target interpolation service (e.g., the target interpolation service 214 illustrated in FIG. 2) receives an altitude target. For example, a crewmember can enter an altitude target into a CDU. This is illustrated, below, with regard to FIG. 6A.

At block 404, the target interpolation service interpolates aircraft position at the altitude target. In an aspect, the target interpolation service calculates the travel distance for the aircraft to reach the target altitude, from the aircraft's current position. For example, the target interpolation service can use the aircraft's current vertical trajectory and position to interpolate the point at which the aircraft will reach the target altitude.

The target interpolation service can then calculate the coordinates of this point, and can provide these coordinates to a crewmember or flight management service (e.g., as discussed above in relation to block 308 illustrated in FIG. 3). The target interpolation service can also calculate the distance to reach this point, and can update a navigation display to reflect this travel distance (e.g., as discussed above in relation to block 306 illustrated in FIG. 3). In an embodiment, the target interpolation service can calculate the distance directly (e.g., along a straight line) or along a trajectory.

FIG. 5 is a flowchart illustrating determining an intersection point for a time fix, according to one aspect. In an aspect, FIG. 5 corresponds with another example for block 304 illustrated at FIG. 3. For example, a FMS can implement both an altitude feature for a fix info function, as discussed above in relation to FIG.4, and a time feature for the fix info function, as discussed in relation to FIG. 5. Alternatively, the FMS can implement either an altitude feature for the fix info function, or a time feature for the fix info function, but not both.

At block 502, a target interpolation service (e.g., the target interpolation service 214 illustrated in FIG. 2) receives a time target. For example, a crewmember can enter an ETA target into a CDU. This is merely an example, and any suitable time target can be used.

At block 504, the target interpolation service interpolates aircraft position at the time target. In an aspect, the target interpolation service calculates the travel distance for the aircraft to reach the target time, from the aircraft's current position. For example, the target interpolation service can use the aircraft's current vertical trajectory and position, and can calculate the aircraft's predicted position at the desired time.

The target interpolation service can then calculate the coordinates of this point, and can provide these coordinates to a crewmember or flight management service (e.g., as discussed above in relation to block 308 illustrated in FIG. 3). The target interpolation service can also calculate the distance to reach this point, and can update a navigation display to reflect this travel distance (e.g., as discussed above in relation to block 306 illustrated in FIG. 3).

FIG. 6A illustrates an example altitude fix for a FMS, according to one aspect. In an aspect, an aircraft FMS includes a CDU display 610 and a navigation display 620. The CDU display 610 displays a fix info function, as illustrated. The CDU display 610 allows entry of a target altitude 612. For example, a crewmember can press a button 602, and can enter a target altitude fix (e.g., 10,000 feet, as illustrated). As discussed above in relation to FIGS. 3-4, the FMS can then interpolate the aircraft position at the target altitude fix (e.g., based on the aircraft current position and trajectory). An altitude fix is merely one example, and the CDU display 610 can instead (or in addition) allow entry of a target time fix, as discussed above in relation to FIGS. 3 and 5.

FIG. 6B illustrates latitude and longitude for an altitude fix for a FMS, according to one aspect. As discussed above, a crewmember can enter a target altitude 612 for a CDU display 610. The crewmember can then request coordinates for the interpolated point. For example, the crewmember can press the button 604 to display the coordinates 614 (e.g., latitude and longitude). In an aspect, the coordinates 614 represent the interpolated aircraft position at the target altitude fix. The coordinates can then be used to update a flight plan (e.g., as discussed above in relation to blocks 310 and 312 illustrated in FIG. 3). As noted above an altitude fix is merely one example, and the CDU display 610 can instead (or in addition) provide coordinates for a time fix, as discussed above in relation to FIGS. 3 and 5.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The disclosure comprises the subject matter described in the following clauses:
Clause 1. A method, comprising: receiving, at a flight management system (FMS) of an aircraft, a target value, the target value comprising at least one of: (i) an altitude target value or (ii) a time target value; determining a target aircraft position relating to the target value, based on a trajectory for the aircraft; calculating a distance for the aircraft to travel from a current aircraft position to the target aircraft position; displaying the calculated distance in a user interface of the aircraft; and providing coordinates for the target aircraft position to the FMS for use in flight management of the aircraft.
Clause 2. The method of clause 1, wherein the target value comprises the altitude target value and wherein the target aircraft position comprises an estimated position at which the aircraft will next reach the altitude target value.
Clause 3. The method of clause 1 or clause 2, further comprising: receiving, at the FMS of the aircraft, a second target value comprising a time target value; determining a second target aircraft position relating to the second target value, based on a second trajectory for the aircraft; calculating a second distance for the aircraft to travel from an updated current aircraft position to the second target aircraft position; displaying the second calculated distance in the user interface of the aircraft; and providing second coordinates for the second target aircraft position to the FMS for use in flight management of the aircraft.
Clause 4. The method of any preceding clause, wherein the target value comprises the time target value and wherein the target aircraft position comprises an estimated position for the aircraft at the time target value.
Clause 5. The method of any preceding clause, wherein the trajectory comprises a vertical trajectory for the aircraft.
Clause 6. The method of any preceding clause, wherein providing coordinates for the target aircraft position to the FMS comprises: displaying the target coordinates in a command display unit (CDU) of the aircraft; and storing the target coordinates in an electronic repository relating to the CDU.
Clause 7. The method of clause 6, wherein the coordinates are provided in response to a user input to the CDU.
Clause 8. The method of any preceding clause, further comprising: modifying a flight plan for the aircraft based on the coordinates.
Clause 9. The method of clause 8, further comprising: navigating the aircraft based on the modified flight plan.
Clause 9a. A system, comprising: a computer processor; and a memory having instructions stored thereon which, when executed on the computer processor, performs operations comprising the steps of the method of any preceding clause.
Clause 9b. A computer-readable medium containing computer program code that, when executed by operation of one or more computer processors, performs operations comprising the steps of the method of any preceding clause.
Clause 10. A computer-readable medium containing computer program code that, when executed by operation of one or more computer processors, performs operations comprising: receiving, at a flight management system (FMS) of an aircraft, a target value, the target value comprising at least one of: (i) an altitude target value or (ii) a time target value; determining a target aircraft position relating to the target value, based on a trajectory for the aircraft; calculating a distance for the aircraft to travel from a current aircraft position to the target aircraft position; displaying the calculated distance in a user interface of the aircraft; and providing coordinates for the target aircraft position to the FMS for use in flight management of the aircraft.
Clause 11. The computer-readable medium of clause 9b or clause 10, wherein the target value comprises the altitude target value and wherein the target aircraft position comprises an estimated position at which the aircraft will next reach the altitude target value.
Clause 12. The computer-readable medium of any of clauses 9b to 11, the operations further comprising: receiving, at the FMS of the aircraft, a second target value comprising a time target value; determining a second target aircraft position relating to the second target value, based on a second trajectory for the aircraft; calculating a second distance for the aircraft to travel from an updated current aircraft position to the second target aircraft position; displaying the second calculated distance in the user interface of the aircraft; and providing second coordinates for the second target aircraft position to the FMS for use in flight management of the aircraft.
Clause 13. The computer-readable medium of any of clauses 9b to 12, wherein the target value comprises the time target value and wherein the target aircraft position comprises an estimated position for the aircraft at the time target value.
Clause 14. The computer-readable medium of any of clauses 9b to 13, wherein providing coordinates for the target aircraft position to the FMS comprises: displaying the target coordinates in a command display unit (CDU) of the aircraft; and storing the target coordinates in an electronic repository relating to the CDU, and wherein the coordinates are provided in response to a user input to the CDU.
Clause 14a. The computer-readable medium of any of clauses 9b to 13, wherein providing coordinates for the target aircraft position to the FMS comprises: displaying the target coordinates in a command display unit (CDU) of the aircraft, wherein the coordinates are provided in response to a user input to the CDU.
Clause 15. The computer-readable medium of any of clauses 9b to 14a, the operations further comprising: modifying a flight plan for the aircraft based on the coordinates; and navigating the aircraft based on the modified flight plan.
Clause 15a. The computer-readable medium of any of clauses 9b to 15, wherein the computer-readable medium is a non-transitory computer-readable medium.
Clause 16. A system, comprising: a computer processor; and a memory having instructions stored thereon which, when executed on the computer processor, performs operations comprising: receiving, at a flight management system (FMS) of an aircraft, a target value, the target value comprising at least one of: (i) an altitude target value or (ii) a time target value; determining a target aircraft position relating to the target value, based on a trajectory for the aircraft; calculating a distance for the aircraft to travel from a current aircraft position to the target aircraft position; displaying the calculated distance in a user interface of the aircraft; and providing coordinates for the target aircraft position to the FMS for use in flight management of the aircraft.
Clause 17. The system of clause 16, wherein the target value comprises the altitude target value and wherein the target aircraft position comprises an estimated position at which the aircraft will next reach the altitude target value.
Clause 18. The system of clause 16 or clause 17, the operations further comprising: receiving, at the FMS of the aircraft, a second target value comprising a time target value; determining a second target aircraft position relating to the second target value, based on a second trajectory for the aircraft; calculating a second distance for the aircraft to travel from an updated current aircraft position to the second target aircraft position; displaying the second calculated distance in the user interface of the aircraft; and providing second coordinates for the second target aircraft position to the FMS for use in flight management of the aircraft.
Clause 19. The system of any of clauses 16 to 18, wherein the target value comprises the time target value and wherein the target aircraft position comprises an estimated position for the aircraft at the time target value.
Clause 20. The system of any of clauses 16 to 19, the operations further comprising: modifying a flight plan for the aircraft based on the coordinates; and navigating the aircraft based on the modified flight plan.
Clause 21. The system of any of clauses 16 to 20 arranged to perform the method of any of clauses 1 to 9.
Clause 22. A method of using the system of any of clauses 16 to 20, optionally the method comprising the steps of any of clauses 1 to 9.

While the foregoing is directed to aspects of the present disclosure, other and further aspects of the disclosure may be devised without departing from the basic scope thereof, and the scope thereof is determined by the claims that follow.

## Claims

1. A method, comprising:
receiving, at a flight management system (FMS) of an aircraft (100), a target value (402, 502), the target value comprising at least one of: (i) an altitude target value (402, 612) or (ii) a time target value (502, 612);
determining a target aircraft position relating to the target value, based on a trajectory for the aircraft (404, 504);
calculating a distance for the aircraft to travel from a current aircraft position to the target aircraft position (404, 504);
displaying the calculated distance in a user interface of the aircraft (306); and
providing coordinates for the target aircraft position to the FMS for use in flight management of the aircraft (614).

2. The method of claim 1, wherein the target value comprises the altitude target value (402, 612) and wherein the target aircraft position comprises an estimated position at which the aircraft will next reach the altitude target value (404).

3. The method of claim 1 or claim 2, further comprising:
receiving, at the FMS of the aircraft, a second target value comprising a time target value (502);
determining a second target aircraft position relating to the second target value, based on a second trajectory for the aircraft (504);
calculating a second distance for the aircraft to travel from an updated current aircraft position to the second target aircraft position (504);
displaying the second calculated distance in the user interface of the aircraft (306); and
providing second coordinates for the second target aircraft position to the FMS for use in flight management of the aircraft (614).

4. The method of any preceding claim, wherein the target value comprises the time target value (502, 612) and wherein the target aircraft position comprises an estimated position for the aircraft at the time target value (504).

5. The method of any preceding claim, wherein the trajectory comprises a vertical trajectory for the aircraft (404, 504).

6. The method of any preceding claim, wherein providing coordinates for the target aircraft position to the FMS comprises:
displaying the target coordinates in a command display unit (CDU) of the aircraft (612); and
storing the target coordinates in an electronic repository relating to the CDU (610), optionally wherein the coordinates are provided in response to a user input to the CDU (602).

7. The method of any preceding claim, further comprising:
modifying a flight plan for the aircraft based on the coordinates (310), and optionally navigating the aircraft based on the modified flight plan (312).

8. A computer-readable medium containing computer program code that, when executed by operation of one or more computer processors, performs operations comprising the steps of the method of any of claims 1 to 5.

9. The computer-readable medium of claim 8, wherein providing coordinates for the target aircraft position to the FMS comprises:
displaying the target coordinates in a command display unit (CDU) of the aircraft (612), wherein the coordinates are provided in response to a user input to the CDU (602).

10. The computer-readable medium of claim 8 or claim 9, the operations further comprising:
modifying a flight plan for the aircraft based on the coordinates (310); and
navigating the aircraft based on the modified flight plan (312).

11. A system, comprising:
a computer processor; and
a memory having instructions stored thereon which, when executed on the computer processor, performs operations comprising:
receiving, at a flight management system (FMS) of an aircraft (100), a target value (402, 502), the target value comprising at least one of: (i) an altitude target value (402) or (ii) a time target value (502);
determining a target aircraft position relating to the target value, based on a trajectory for the aircraft (404, 504);
calculating a distance for the aircraft to travel from a current aircraft position to the target aircraft position (404, 504);
displaying the calculated distance in a user interface of the aircraft (306); and
providing coordinates for the target aircraft position to the FMS for use in flight management of the aircraft (614).

12. The system of claim 11, wherein the target value comprises the altitude target value (402, 612) and wherein the target aircraft position comprises an estimated position at which the aircraft will next reach the altitude target value (404).

13. The system of claim 11 or claim 12, the operations further comprising:
receiving, at the FMS of the aircraft, a second target value comprising a time target value (502);
determining a second target aircraft position relating to the second target value, based on a second trajectory for the aircraft (504);
calculating a second distance for the aircraft to travel from an updated current aircraft position to the second target aircraft position (504);
displaying the second calculated distance in the user interface of the aircraft (306); and
providing second coordinates for the second target aircraft position to the FMS for use in flight management of the aircraft (614).

14. The system of any of claims 11 to 13, wherein the target value comprises the time target value (502, 612) and wherein the target aircraft position comprises an estimated position for the aircraft at the time target value (504).

15. The system of any of claims 11 to 14, the operations further comprising:
modifying a flight plan for the aircraft based on the coordinates (310); and
navigating the aircraft based on the modified flight plan (312).
